(19) Europäisches Patentamt
European Patent Office
Office européen des brevets

(11) EP 0 978 522 A1

(12) **EUROPEAN PATENT APPLICATION**

(43) Date of publication:
**09.02.2000 Bulletin 2000/06**

(51) Int. Cl.[7]: **C08G 18/10**, C08G 18/12, C08G 18/50, C09D 7/00

(21) Application number: **99114927.9**

(22) Date of filing: **30.07.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **06.08.1998 US 129990**

(71) Applicant:
**National Starch and Chemical Investment Holding Corporation**
**Wilmington, Delaware 19803-7663 (US)**

(72) Inventors:
- **Kukkala, Pravin K.**
  **Louisville Kentucky 40241 (US)**
- **Kielbania, Andrew J., Jr.**
  **Chalfont, Pennsylvania 18914 (US)**
- **Verstrat, Daniel W.**
  **Ooltewah, Tennessee 37363 (US)**
- **Montague, Peter G.**
  **Signal Mountain, Tennessee 37377 (US)**

(74) Representative:
**Held, Stephan, Dr.rer.nat., Dipl.-Chem. et al**
**Patentanwälte,**
**Hagemann, Braun und Held,**
**Patentanwälte,**
**Postfach 86 03 29**
**81630 München (DE)**

(54) **Associative thickeners for aqueous systems**

(57) The present invention is directed to associative thickener compositions which are urethane/urea polymers comprising at least two low molecular weight hydrophobic groups, at least one of which is terminal. The polymers may also comprise one or more internal hydrophobic groups. The terminal hydrophobic groups are separated from the polymer chain by a hydrophilic spacer moiety which is linked to the chain by a urea or urethane linkage. The polymers are prepared by the reaction of a prepolymer formed from the reaction of a hydrophilic diol or alkoxy based amine and diisocyanate, with an alkoxylated amine substituted hydrophobic radical.

EP 0 978 522 A1

## Description

This application relates to a new class of nonionic polyurethane/urea associative thickeners useful for thickening and modifying the liquid rheology of aqueous systems. These polyurethane/urea rheology modifiers are more efficient in a wide variety of aqueous systems than those in the prior art.

The present invention is directed to nonionic polyurethane\urea based associative thickener compositions with enhanced associative behavior, and processes to produce such thickeners.

Nonionic polyurethanes are known to be useful as rheology modifiers. U.S. Patent No. 4,079,028 discloses polyurethanes having two or more terminal hydrophobic end groups per molecule. Nonionic polyurethane rheology modifiers made with bunches of monovalent hydrophobic groups are disclosed in U.S. Patent No. 4,426,485. Nonionic polyurethanes having a hydrophilic backbone and pendant monovalent hydrophobic groups have also been disclosed.

Nonionic polyurethane thickeners have been the subject of considerable theoretical investigations. Some of the leading references include: D.J. Lundberg and J.E. Glass, J. Coatings Technology, 64 (807) p 53 (1992); A. Karunassena and J.E. Glass, Progress in Organic Coatings, 17 p 301 (1989); D.J. Lundberg and J.E. Glass, J. Rheology, 35 (6) p 1255 (1991); B. Richey et al., J. Coatings Technology, 63 (798) p 31 (1991); T. Annable et al., Langmuir, 10 (4) p 1060 (1994); K. Zhang et al., J. Phys. Chem., 100 p 9834 (1996); P.R. Sperry, J. Colloid and Interface Science, 99 (1) p 97 (1984); T. Annable et al., J. Rheology, 37 (4) p 695 (1993).

Nonionic polyurethane thickeners have been used in an extensive number of applications to thicken aqueous based polymer systems including solution, suspension, latex and emulsions for coatings, adhesive, nonwoven, textile, paper, sizing of fibers, cosmetics, personal care, skin care and hair care applications. Additional uses for these thickeners are disclosed in U.S. Patent No. 4,079,028 and 4,155,892. For example, aqueous systems in which the polymeric thickeners are useful include aqueous coating compositions for the paper, leather and textile industries, oil well flooding compositions and drilling muds, detergents, adhesives, waxes, polishes, cosmetics and toiletries, topical pharmaceuticals, and pesticidal or agricultural compositions for the control of insects, rodents, fungi, parasites of all kinds, and undesirable plant growth.

The associative thickeners of the present invention comprise a spacer moiety between the urea linkage and the alkyl radical.

The present invention is directed toward associative thickeners for aqueous systems which provide not only thickening of water and aqueous based systems, but also excellent flow, leveling and recovery of thickening after shearing. These thickeners impart excellent control of viscosity under conditions of high or low shear forces. Shear forces depend upon the method used to apply the aqueous system on to a substrate. Examples of different application techniques include roller coating, knife coating, brushing, stirring, printing, saturation, nipping, spraying, extrusion, dipping or other methods known to those skilled in the art where an aqueous system is moved or forced through a narrow or constricted opening or metered onto a substrate. The thickeners of the present invention also maintain their superior rheological characteristics when applied to substrates in a manner which also imparts shear to the aqueous system at room temperature or elevated temperatures to enhance drying. Examples of substrates include porous materials such as wood, paper, leather, plaster, cement, concrete, stone, ceramics, synthetic and natural fibers including hair, fur, cotton, other cellulosics, polyester, nylon, polypropylene, glass, cloth, fabrics and other porous materials where penetration or wicking of the liquid generates shear forces.

The prior art has already demonstrated that nonionic polyurethane associative thickeners can thicken or modify the viscosity of aqueous based systems such as aqueous latex polymers or aqueous dispersions. However, a particularly stringent test of the effectiveness or efficiency of associative thickeners is conducted by measuring the viscosity of water or dilute aqueous solutions rather than the viscosity of aqueous latexes or dispersions. The associative thickeners of the prior art are not as efficient in the thickening of water or dilute aqueous solutions when compared to the associative thickeners of the present invention. The prior art thickeners, when added to water at the 2% level, give Brookfield viscosities of less than about 400 cps and therefore are ineffective or inefficient in the thickening of water. The thickeners of the present invention are particularly efficient in aqueous systems containing high percentages of water compared to the other formulation ingredients. The thickeners of the present invention are also more efficient in thickening water at lower thickener concentrations compared to prior art thickeners.

Another significant drawback of the nonionic polyurethane thickeners of the prior art is the difficulty encountered in their synthesis. In general, the synthetic reactions are sluggish and time consuming even when catalysts are used to accelerate the reactions. These syntheses usually take three or more days to complete and in some cases seven days or more are required. These types of processes are difficult, expensive and time consuming to conduct on an industrial scale. The thickeners of the present invention overcome this drawback. The synthesis of the thickeners of the present invention usually takes about 30 hours or less to complete.

The present invention is directed to associative thickener compositions with enhanced associative behavior, and to processes to produce such thickeners for a wide variety of applications using aqueous based systems.

The thickeners of the present invention are urethane/urea polymers comprising at least two low molecular

weight hydrophobic groups, at least one of which is terminal. The polymers may also comprise one or more internal hydrophobic groups. The terminal hydrophobic groups are separated from the polymer chain by a hydrophilic spacer moiety which is linked to the chain by a urea linkage.

It has been found in accordance with the present invention that this spacer moiety enhances thickening behavior and control of rheological properties. Without the spacer, Newtonian type behavior (viscosity of liquid independent of shear rate) or inadequate liquid rheology modification and control occurs.

The polymers are prepared by the reaction of a prepolymer formed from the reaction of a hydrophilic diol and diisocyanate, with an alkoxylated amine substituted hydrophobic radical.

The reaction time is decreased by using an amine functional hydrophobe leading to a urea linkage instead of a hydroxyl-functional hydrophobe which would give a urethane linkage. In addition, the reaction can be performed in a solvent-free environment, although solvent may be used to control reaction viscosity and/or reaction rates.

The invention relates to associative thickener compositions and processes to produce such thickeners with enhanced associative behavior. Specifically the associative thickeners are of the general formula:

$$(XY_1Z)_n\text{-}A\text{-}(ZY_2X')_m$$

where X and X' are hydrophobic radicals, Z is an internal hydrophobic group, A is a polyol or an alkoxy based amine; $Y_1$ or $Y_2$ each represent an hydrophilic spacer; m and n are integers from 0 to 5 provided that $m + n > 1$ ; and Z is always attached to A via a urethane linkage if A is a polyol and attached to A via a urea linkage if A is an amine terminated alkoxy; and Z is attached to $Y_1$ and $Y_2$ via a urea linkage. This urea linkage allows for free, unhindered rotation of the linkage as, for example, per the Gauss Principle of Least Constraint. This rotation around the carbon-nitrogen bond provides the polymer with good associative behavior.

The terminal hydrophobic groups, X and X' can be the same or different and are alkyls or aryl alkyls of 8 to 26 carbon atoms.

Variables n and m are integers from 0 to about 5, provided that $n+m>1$ . Because $n+m>1$ , there will be at least one terminal hydrophobic group present in the thickeners of the present invention. In a preferred embodiment, there will be two or more terminal hydrophobic groups present.

Z is an internal hydrophobic radical, preferably derived from a diisocyanate. Variable Z may be derived from an isocyanate of the formula OCN-R-NCO wherein R is aliphatic, cycloaliphatic or aromatic with 1 to 10 carbon atoms. Examples of isocyanates include 4,4'-methylene bis (cyclohexyl) isocyanate, also referred to as hydrogenated MDI, 4,4'-methylene diphenylisocyanate ("MDI"), isophorone diisocyanate, hexamethylene diisocyanate, 1,3-bis(isocyanatomethyl)cyclohexane, and m-xylylenediisocyanate are the preferred diisocyanates.

Variable Z may also be derived from an isocyanate selected from the group consisting of 1,4-tetramethylene diisocyanate, 1,6-hexamethylene diisocyanate ("HDI"), 2,2,4-trimethyl-1,6-diisocyanatohexane, 1,10-decamethylene diisocyanate, 1,4-cyclohexylene diisocyanate, 4,4'-methylenebis(isocyanatocyclohexane), 1-isocyanato-3-isocyanatomethyl-3,5,5-trimethylcyclohexane, m- and p-phenylene diisocyanate, 2,6- and 2,4-tolylene diisocyanate, xylene dilsocyanate, 4-chloro-1,3-phenylene diisocyanate, 4,4'-biphenylene diisocyanate, 4,4'-methylene diphenylisocyanate, 1,5-naphthalene diisocyanate, 1,5-tetrahydronaphthalene diisocyanate, isophorone diisocyanate, hexamethylene diisocyanate and 4,4'-methylene bis (cyclohexyl) diisocyanate.

Z can always be the same hydrophobic radical, or can be different if more than one diisocyanate is used. For example, if two different diisocyanates are used, there could be two hydrophobic linkages- one connected to $Y_1$ and a different one connected to $Y_2$.

The hydrophilic spacers, $Y_1$ and $Y_2$ are selected from the group consisting of an amine terminated linear polyethoxylate chain, an amine terminated ethoxylated/propoxylated polymer chain, or an amine terminated ethoxylated/butoxylated polymer chain. $Y_1$ and $Y_2$ may be terminated with a primary or secondary amine group. In one embodiment, the alkoxylated chains will have a molecular weight of greater than 1500; in another embodiment, the alkoxylated chains will have a molecular weight of less than 1500.

In another embodiment $Y_1$ and $Y_2$ may be polysuccinimide, polyvinyl pyrrolidone, poly n-vinyl formamide, or any other amine terminated water soluble polymer.

In either embodiment, $Y_1$ and $Y_2$ may be of the same length or of different lengths, and may be branched or linear, substituted or unsubstituted. The preferred hydrophilic spacer contains from about 6 to 50 ethoxylate units and from 1 to 5 propoxylate units. The most preferred spacer contains 10 to 40 ethoxylates with 1 to 5 propoxylate units.

In another embodiment, the associative thickeners of the present invention will comprise only $Y_1$ or $Y_2$, but not both. For example, a thickener of the formula $(XY_1Z)_n\text{-}A\text{-}(ZX')_m$ is within the contemplated scope of the present invention. In addition, a thickener with the formula $(XZ)_n\text{-}A\text{-}(ZY_2X')_m$ is also within the scope of the present invention. In a further embodiment, thickeners of the present invention can selected from the group consisting of $(XY_1Z)_n\text{-}A\text{-}(ZX')_m$, $(XZ)_n\text{-}A\text{-}(ZY_2X')_m$, and $(XY_1Z)_n\text{-}A\text{-}(ZY_2X')_m$ and combinations thereof.

"A" is an alkoxy based amine or a hydrophilic diol with the presence of a polyol (functionality >2) also being an

option. "A" may be any polyol, however, if polyethylene glycol is chosen the molecular weight of the polyethylene glycol should be less than about 20,000, preferably less than 10,000. The polyol may be linear, or branched, wherein each branch includes a terminal hydroxyl group. Polyethylene glycols containing hydrocarbon radicals can be used such as bisphenol-A ethoxylates. Examples of such bisphenol-A ethoxylates include SYNFAC which is available form the Milliken Chemical Co. and MACOL which is available from BASF Corporation. In addition, "A" comprising EO/BO or EO/BO/PO polymers, or EO/PO copolymers can also be used, for example, the commercially available PLURONICS from BASF Corporation. "A" may also be a hydroxy terminated polyurethane polyol based upon polyethylene glycol or an alkoxy based amine such as JEFFAMINE diamine or triamine, which have terminal amine groups. JEFFAMINE is a trade name of Huntsman Corporation. "A" can also be the ethylene oxide/butylene oxide di or triblock copolymers. Such copolymers are available from Dow. The preferred polyols are trimethylol propane, [2-ethyl-2-(hydroxymethyl)-1,3-propanediol], pentaerythritol, glycerol and sorbitol.

In one embodiment, A is selected from the group consisting of polyethylene glycol, trimethylol propane, and combinations thereof In another embodiment, A is selected from the group consisting of bisphenol A ethoxylates; diols of EO/BO, EO/PO, EO/BO/PO polymers; triols of EO/BO, EO/PO, EO/BO/PO polymers; diols of hydroxy terminated polyurethane polyols based upon polyethylene glycol or alkoxy based amines; triols of hydroxy terminated polyurethane polyols based upon polyethylene glycol or an alkoxy based amines; 2-ethyl-2-(hydroxymethyl)-1,3-propanediol; pentaerythritol; glycerol; sorbitol; polyethylene glycol and combinations thereof.

When A has a terminal amine, the internal hydrophobic radical, Z, is attached to A, via a urea linkage; when A has a terminal hydroxyl group, Z is attached to A via a urethane linkage.

In addition to those discussed above, hydrophilic diols, diisocyanates, polyols and polyisocyanates which can be used to prepare the associative thickeners of the present invention will be familiar to those skilled in the art. For example, other hydrophilic diols, diisocyanates, polyols and polyisocyanates can be found in U.S. Patent No. 4,079,028.

A specific example of the associative thickener of this invention is represented by:

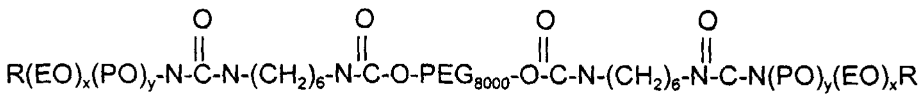

y ≅2
x ≅23
R = linear $C_{16-18}$ alkyl hydrophobe
$PEG_{8000}$ = polyethylene glycol of approximately 8000 molecular weight
EO = ethylene oxide units
PO = propylene oxide units

The associative thickeners of the present invention are usually prepared by first reacting a hydrophilic diol or alkoxy based amine with a diisocyanate to form an isocyanate terminated prepolymer, then reacting the prepolymer with an amine terminated hydrophobe containing a hydrophilic spacer between the amine and the hydrophobic alkyl group. The reaction time is decreased by using an amine functional hydrophobe leading to a urea linkage instead of a hydroxyl-functional hydrophobe which would give a urethane linkage. The reaction of an amine with an isocyanate is a much faster reaction than the reaction of an hydroxy group with an isocyanate. It is well known that the reaction of a primary amine, with an unhindered isocyanate, is about 100-1000 times faster than the reaction of an isocyanate with a primary alcohol. G. Woods, The ICI Polyurethanes Book, p 28, Second Edition, 1990.

If a branched structure is desired, a low amount of a polyfunctional (greater than 2) polyol or polyisocyanate (functionality greater than 2) may be incorporated into the prepolymer synthesis which will provide associative thickeners with more than 2 hydrophobes in the associative thickener molecule. The amount of polyol and polyisocyanate must be of low enough concentration to prevent gelling or total insolubility of the final associative thickener. In many cases, the concentration of the polyfunctional material will vary depending upon the desired properties of the thickener. The approximate concentration of polyfunctional reactants that are needed can be easily determined by one of ordinary skill in the art.

The associative thickener may be prepared in the presence or absence of solvent. When solvents are used, the solvent, along with the diols, polyols and terminal hydrophobic reactant, should be dried to eliminate any water that may be present before the synthesis. Solvents suitable for use in the present invention are ones which are inert to the isocyanate functional group and in which the reactants are soluble. The resulting associative thickener may or may not

be soluble in the reaction solvent. Preferred solvents include acetone, methyl ethyl ketone, ethyl acetate, toluene, xylene and dialkyl ethers of ethylene glycol or diethylene glycol.

The synthesis may be conducted at room temperature, but elevated temperatures are preferred to accelerate the rate of reaction. The synthesis is usually conducted at a temperature ranging from room temperature to about 120°C. Preferably the temperature is about 55°C to 80°C.

Catalysts can also be used to help accelerate the reaction. U.S. Patent No. 4,336,180 contains a list of suitable catalysts. Dibutyltin dilaurate and 1,4-diazabicyclo [2,2,2] octane (DABCO) are preferred catalysts.

The thickeners of the present invention are useful in coatings, paints, paper coating, binders, adhesives, cosmetics, personal care, skin care and hair care. These thickeners provide significant advantages when used with aqueous systems for thickened water, water solutions, aqueous emulsions and aqueous suspensions. Many coating systems require the coating to conform to stringent rheological performance criteria which are affected by the thickener selected for the coating formulation. Efficient thickening and rheological control are provided by the non-ionic thickeners of the present invention.

Nonionic thickeners are particularly useful in cosmetics, personal care, hair care and skin care applications. These applications have complex formulations which can contain nonionic, anionic, cationic or amphoteric functionalized ingredients ranging from very low to very high concentration. The associative thickeners of our invention are compatible with all these complex formulations. In addition, our associative thickeners are more effective than those of the prior art. They are capable of effectively modifying the rheological characteristics of the formulation. For example, in hair conditioner formulations, these associative thickeners provide high viscosity initially, yet when applied, they shear thin to low viscosity for ease of application and then once applied, the viscosity increases to keep the conditioner in place and prevent it from dripping off from its initial area of application. The controlled modification of viscosity under varying shear or application conditions is important for various lotions, gels, mousses, creams, shampoos, conditioners, hair fixatives, rinses, moisturizers and other skin and hair care applications.

One embodiment of the present invention is directed to a process to prepare a polymer comprising reacting an isocyanate terminated polyetherpolyurethane with an alkoxylated amine hydrophobic group. In another embodiment, the amine is a primary amine. In a further embodiment, the amine is a secondary amine.

The present invention is also directed to a process to thicken water, or a process to thicken an aqueous emulsion, or to thicken an aqueous suspension comprising adding a polymer having at least two low molecular weight hydrophobic groups, at least one of which is terminal, wherein the hydrophobic groups are separated from the polymer chain by a hydrophilic spacer moiety and wherein the spacer is connected to the polymer chain by a urethane or urea linkage.

<u>Examples</u>

The synthesis of the associative thickeners was conducted using the following equipment. A three neck, one liter flask with a nitrogen purge was equipped with a reflux condenser, heating mantle, thermometer and a stainless steel paddle with a stainless steel stirring shaft and powered with a constant torque electrical motor. A Brookfield viscometer was used to measure viscosity at room temperature unless noted otherwise. Temperature was measured in degrees centigrade.

The following reactants were used in the various examples.

<u>List of Abbreviations</u>

| | |
|---|---|
| IPDI | - isophorone diisocyanate |
| HDI | - hexamethylene diisocyanate |
| HMDI | - 4,4'-methylene bis (cyclohexyl) isocyanate, also referred to as hydrogenated MDI |
| PEG 8000 | - poly(ethylene glycol) with an average molecular weight of about 8000 |
| PEG 4600 | - poly(ethylene glycol) with an average molecular weight of about 4600 |
| TMP | - trimethylolpropane |
| DBTL | - dibutyltin dilaurate |
| EtOAc | - ethyl acetate |

Description of hydrophobes: The primary amines available from Huntsman Corporation, Austin, Texas, have the following structures:

| | Alkyl Group | (EO) | (PO)-$NH_2$ |
|---|---|---|---|
| Hydrophobe A | Linear $C_{12-14}$ | 10 | 2 |
| Hydrophobe B | Linear $C_{16-18}$ | 10 | 2 |
| Hydrophobe C | Linear $C_{16-18}$ | 40 | 3 |
| Hydrophobe D | Linear $C_{12-14}$ | 40 | 3 |
| Hydrophobe E | Linear $C_{16-18}$ | 23 | 2 |
| Hydrophobe F | Branched $C_{12-14}$ | 23 | 2 |
| Hydrophobe G | Nonylphenol (Surfanamine 750) | 9 | 2 |

Comparative Examples 1-10 are representative of associative thickeners of the prior art.

COMPARATIVE EXAMPLE 1

Under a nitrogen atmosphere, 34.50 g of PEG 4600 was heated to 80°C and 3.94 g of HMDI was added. After an initial exotherm to about 95°C, the reaction was held at 80°C for 2 hours at which point 2.37 g of decyl alcohol was added. One drop of DBTL was added and the disappearance of isocyanate functionality was monitored by infrared spectroscopy. When the reaction was completed, the contents of the flask were cooled to room temperature and a solid formed. Approximately 0.5 g of the product was dissolved in 10 ml of water. No effective thickening of water was observed (<500 cps Brookfield viscosity measurement).

COMPARATIVE EXAMPLE 2

Under a nitrogen atmosphere 144.40 g of PEG 8000 was heated to 110°C to eliminate any residual water. The PEG 8000 was cooled to 80°C and 5.15 g IPDI was added. After an initial exotherm to 87°C, the reaction was held for 3 hrs at 80°C. The prepolymer was then reacted with 1.75 g of n-octanol at 60°C. The extent of reaction was monitored by infrared spectroscopy of the isocyanate functionality. When the reaction was completed, 224.8 g of water was added to give a solution of about 38% solids with a viscosity of 940 cps. Water was not effectively thickened by the polymer.

COMPARATIVE EXAMPLE 3

Example 1 was repeated substituting 2.80 g of 1-dodecanol for the decyl alcohol. The same results as in Example 1 were observed. The polymer did not thicken water.

COMPARATIVE EXAMPLE 4

Under a nitrogen atmosphere, 34.00 g of PEG 8000 was heated to 80°C and 2.23 g HMDI was added. After an initial exotherm to 95°C, the reaction was held at 80°C for 2 hours at which point 0.67 g of decyl alcohol was added. One drop of DBTL was added and the disappearance of isocyanate functionality was monitored by infrared spectroscopy. When the reaction was completed, the contents of the flask were cooled to room temperature and formed a solid. Approximately 0.5 g of product was dissolved in 10 ml of water which was not effectively thickened. The viscosity of the solution was less than 500 cps.

COMPARATIVE EXAMPLE 5

Example 4 was repeated substituting 0.79 g of 1-dodecanol for the decyl alcohol. The same results as in example 4 were observed. The polymer did not effectively thicken water.

COMPARATIVE EXAMPLE 6 (Branched Polymer)

Under a nitrogen atmosphere, 0.34 g of TMP, 140.0 g of PEG 8000 and 0.47 g of 1-dodecanol were heated to 60°C. When the reaction mixture was homogeneous, 1 drop of DBTL and 6.56 g of HMDI were added. After an initial

exotherm to 73°C, the reaction was held at 70°C for 3 hours. The reaction was completed by adding an additional 0.47 g of 1-dodecanol along with 70 g of toluene. Upon completion of the reaction, the product was cooled to room temperature and formed a solid. The product did not thicken water.

COMPARATIVE EXAMPLE 7 (Branched Polymer)

Example 6 was repeated substituting 0.79 g of decyl alcohol for the 1-dodecanol. The product did not effectively thicken water.

COMPARATIVE EXAMPLE 8 (Branched Polymer)

Example 6 was repeated using 150.0 g of ethyl acetate as solvent for the reaction. Upon completion of the reaction, the ethyl acetate was removed by vacuum distillation.

COMPARATIVE EXAMPLE 9

A solution of 142.0 g of PEG 8000 and 150.0 g ethyl acetate was heated to 65°C and 0.2 g DBTL and 7.70 g of HMDI were added. The reaction was held at 65°C for 24 hours before 13.20 g of Tergitol 15S-40 was added. Using FTIR unreacted isocyanate was observed after 2, 3 and 24 hours. An additional 300 g of ethyl acetate was added and the reaction mixture was held at 75°C for 72 hours. The product was not effective in thickening water. (Tergitol 15S-40 is a $C_{12}$-$C_{14}$ secondary alcohol ethoxylate containing about 41 ethylene oxide units, available from Union Carbide Corporation.)

COMPARATIVE EXAMPLE 10

A solution of 142.0 g of PEG 8000 and 150.0 g of ethyl acetate was heated to reflux for 30 minutes while purging with nitrogen. The solution was cooled to 55°C and 7.7 g HMDI and 0.2 g DBTL were added. After 3 hours at 55°C, the temperature was raised to 60°C and 1.10 g dodecylamine was added and allowed to react for 24 hours. The ethyl acetate was distilled off and 130.0 g of propylene glycol was added. A solution of 30 g of water and 6 g of product showed that the product did not effectively thicken water.

Examples 11-22 demonstrate the synthesis of associative thickeners of the present invention.

EXAMPLE 11

A solution of 150.0 g ethyl acetate and 140.0 g PEG 8000 was heated to reflux with a nitrogen purge for 30 minutes to remove about 10 ml of ethyl acetate and any residual water. The solution was cooled to 65°C and 7.70 g HMDI and 0.2 g DBTL were added. The reaction solution was held at 65°C for 24 hours while stirring. The temperature was raised to reflux and 9.98 g of hydrophobe A was added. Reflux was continued for 5 hours. The disappearance of the isocyanate functionality was monitored by infrared spectroscopy. When the reaction was completed, the ethyl acetate was distilled off in about 2 hours while simultaneously adding 159.9 g of propylene glycol. The product was cooled to 50°C and 159.9 g of water was added. After stirring for 30 minutes, the product was discharged from the reactor. The product thickened water.

EXAMPLE 12 (Branched Polymer)

Example 11 was repeated with the addition of 0.05 g TMP to the initial EtOAC/PEG charge.

EXAMPLE 13

Example 11 was repeated, but 9.9 g of hydrophobe B was substituted for hydrophobe A.

EXAMPLE 14 (Branched Polymer)

Example 13 was repeated with the addition of 0.05 g TMP to the initial EtOAC/PEG charge.

EXAMPLE 15

Example 11 was repeated, but 25.3 g of hydrophobe C was substituted for hydrophobe A.

EXAMPLE 16 (Branched Polymer)

Example 15 was repeated with the addition of 0.05 g TMP to the initial EtOAC/PEG charge.

EXAMPLE 17

Example 11 was repeated, but 26.7 g of hydrophobe D was substituted for hydrophobe A.

EXAMPLE 18

Example 17 was repeated with the addition of 0.05 g TMP to the initial EtOAC/PEG charge.

EXAMPLE 19

Example 11 was repeated, but 15.0 g of hydrophobe E was substituted for hydrophobe A.

EXAMPLE 19A

Example 11 was repeated, but 11.7 g of hydrophobe E was substituted for hydrophobe A.

EXAMPLE 20 (Branched Polymer)

Example 19 was repeated with the addition of 0.05 g TMP to the initial EtOAC/PEG charge.

EXAMPLE 21

Example 11 was repeated, but 12.0 g of hydrophobe F was substituted for hydrophobe A.

EXAMPLE 22

Example 11 was repeated, but 9.1 g of hydrophobe G was substituted for hydrophobe A.

EXAMPLE 23

This example measures the viscosity of water to which has been added associative thickeners prepared according to comparative Examples 1-10. As the results below indicate, no effective thickening of water was observed. Viscosity was measured using a Brookfield viscometer with #4 spindle at room temperature.

| Example # | % Concentration of Associative Thickeners in $H_2O$ | Viscosity (cps) |
|---|---|---|
| 2 | 38 | 940 |
| 4 | 5 | <500 |
| 6 | 1.0 | 24 |
| 6 | 2.5 | 60 |
| 6 | 5.0 | 920 |
| 10 | 17 | <500 |

EXAMPLE 24

This example measures the viscosity of water to which has been added the associative thickeners of Examples 11-22. As the results below show, effective thickening of water was observed. Viscosity was measured with Brookfield

Viscometer using a #3 spindle at room temperature.

| Example # | % Concentration of Associative Thickeners in $H_2O$ | Viscosity (cps) |
|---|---|---|
| 13 | 2.0 | 3,830 |
| 14 | 2.0 | 2,500 |
| 15 | 2.0 | 2,520 |
| 16 | 2.0 | 520 |
| 19 | 2.0 | 11,500 |
| 19 | 0.3 | 1,840 |
| 20 | 2.0 | 16,900 |
| 20 | 0.2 | 3,260 |

The following examples demonstrate the broad utility of the thickeners of the present invention in a variety of cosmetic and personal care applications.

EXAMPLE 25

The performance of the thickeners of the present invention was evaluated in an alpha hydroxy acid skin cream formulation. The following formulation was used.

| Ingredient | % |
|---|---|
| Associative thickener | 0.5 (when used) |
| Propylene glycol | 2.00 |
| $Na_4$EDTA (39%) | 0.25 |
| Octyl methoxycinnamate | 4.00 |
| Lapyrium chloride | 0.50 |
| Steapyrium chloride | 0.50 |
| Cetearyl alcohol | 2.00 |
| Glyceryl stearate/glycerin | 3.00 |
| Cyclomethicone | 4.00 |
| Dimethicone | 1.00 |
| Isopropyl myristate | 2.00 |
| Glycolic acid (70%) | 4.29 |
| Water | To 100% |

The following results were obtained.

| Thickener | Initial pH | Viscosity (cps) |
|---|---|---|
| Example 19 | 1.9 | 90, 375 |
| Example 20 | 1.8 | 52, 512 |
| None | 2.1 | 10, 344 |
| Example 6 | 2.3 | 3,000 |

The results show that the thickeners of the present invention are very effective in raising the viscosity of a cationic alpha hydroxy acid cream when compared to a cream that does not comprise a thickener or comprises a thickener of the prior art. Alpha hydroxy skin cream formulations are low in pH and contain cationic surfactants, therefore, this example demonstrates both cationic compatibility and effective thickening under acid conditions.

EXAMPLE 26

The performance of the thickeners of the present invention was evaluated in an aqueous antiperspirant lotion.
The following formulation was used:

| Ingredient | % |
|---|---|
| Thickener (when used) | 0.50 |
| Propylene glycol | 4.00 |
| Aluminum chlorohydrate (50%) | 42.00 |
| Glyceryl stearate/PEG-100 stearate | 3.00 |
| Cetearyl alcohol | 0.75 |
| Glyceryl stearate/glycerine | 1.50 |
| Cyclomethicone | 2.00 |
| Water | To 100% |

The following results were obtained:

| Thickener | Initial pH | Viscosity (cps) |
|---|---|---|
| Example 19 | 3.8 | 12,300 |
| Example 20 | 3.8 | 2,288 |
| None | 4.0 | 250 |

Aqueous antiperspirant lotion formulations are low in pH and high in electrolyte levels (aluminum chlorohydrate). The results of this example demonstrate that the thickeners of the present invention are very effective in raising the viscosity of low pH and high salt formulations when compared to the same formulation which does not comprise a thickener.

EXAMPLE 27

The performance of the thickeners of the present invention was evaluated in a hair conditioning formulation.

The following formulation was used:

| Ingredient | % |
|---|---|
| Thickener (when used) | 2.00 |
| Polyquaternium-10 | 0.50 |
| Glycerin | 2.00 |
| Laneth-15 | 1.00 |
| Cetearyl alcohol | 2.50 |
| Mineral oil | 2.00 |
| Cetyl acetate/acetylated lanolin alcohol | 1.00 |
| Cetrimonium chloride (25%) | 4.00 |
| Citric acid (20%) | to pH 4 |
| Water | To 100% |

The following results were observed:

| Thickener | Initial pH | Viscosity (cps) |
|---|---|---|
| Example 19 | 4.4 | 98,854 |
| Example 20 | 4.4 | 5,554 |
| None | 4.4 | 300 |

The high viscosity of the hair conditioning formulation comprising the thickeners, as compared to a formulation without thickener demonstrate the remarkable effectiveness of these thickeners in formulations which contain high levels of cationic functionality, monomeric and polymeric conditioning agents.

EXAMPLE 28

The performance of the thickeners of the present invention was evaluated in a shampoo formulation. The results of this evaluation demonstrates the effectiveness of these thickeners in raising the viscosity of highly concentrated surfactant systems.

The following formulation was used:

| Ingredient | % |
|---|---|
| Thickener (when used) | 2.00 |
| Polyquarternium-10 | 0.75 |
| Sodium lauryl sulfate (29%) | 17.00 |
| Sodium laureth sulfate (26%) | 13.00 |
| Cocamidopropyl betaine (35%) | 2.50 |
| Cocamide DEA | 4.50 |
| Ethylene glycol distearate | 1.25 |
| Steareth-20 | 0.30 |

(continued)

| Ingredient | % |
|---|---|
| Dimethicone | 3.00 |
| Citric acid | to pH 6 |
| Water | To 100% |

The following results were obtained:

| Thickener | Initial pH | Viscosity (cps) |
|---|---|---|
| Example 19 | 5.8 | 11,525 |
| Example 20 | 6.1 | 10,438 |
| None | 6.0 | 4,225 |

EXAMPLE 29

The thickeners of the present inventions were used to raise the viscosity of commercially available JOHNSON'S BABY SHAMPOO and RAVE MOISTURIZING SHAMPOO.

Ingredients - Johnson's Baby Shampoo (bottle label ingredients)
Thickener (post added at 2.5%)

Ingredients

Water
PEG-80 sorbitan laurate
Cocamidopropyl betaine
Sodium trideceth sulfate
Glycerin
Lauroamphoglycinate
PEG-150 distearate
Sodium laureth-13 carboxylate
Fragrance
Polyquaternium-10
Tetrasodium EDTA
Quaternium-15
Citric acid
D&C yellow #10
D&C orange #4

Ingredients - Rave Moisturizing Shampoo (bottle label ingredients)

Thickener post added at 2.5%

Ingredients

Water
Sodium lauryl sulfate
Cocamidopropyl betaine

Sodium chloride
Polyquaternium-10
Glycerin
Polyquaternium-7
Oleth-3 phosphate
Fragrance
BHT
Tetrasodium EDTA
DMDM hydantoin
Iodopropynyl butyl carbamate
Red 33
Yellow 5

To separate samples of the above shampoos, thickeners prepared according to Examples 19 and 20, were added at 2.5 weight percent of the formulation. The viscosity was measured and the following results were observed:

| Formulation | Example | Viscosity (cps) |
|---|---|---|
| JOHNSON'S BABY SHAMPOO | 19 | 2,800 |
| JOHNSON'S BABY SHAMPOO | 20 | 3,200 |
| JOHNSON'S BABY SHAMPOO | None | 800 |
| RAVE MOISTURIZING SHAMPOO | 19 | 4,066 |
| RAVE MOISTURIZING SHAMPOO | 20 | 3,900 |
| RAVE MOISTURIZING SHAMPOO | None | 600 |

As the above results indicate, the addition of the thickener of Example 19 or 20 increases the viscosity of the two shampoos significantly as compared to the shampoos without the thickeners.

EXAMPLE 30

The performance of the thickeners of the present invention was evaluated for compatibility with hydrogen peroxide. The compatibility with hydrogen peroxide is important in personal care applications such as hair dyes. In this test, hydrogen peroxide concentration was measured before and after 20 hours of boiling. The concentration of thickeners used was about 1% in a 6% hydrogen peroxide solution. A retention of 93% or greater after 20 hours of boiling is indicative of a product which will exhibit satisfactory shelf stability. The thickeners of Examples 19 and 20 were compared with ACULYN 44, a nonionic hydrophobically modified ethoxylated urethane rheology modifier designed for personal care application as described in Rohm and Haas' product bulletin FC-309, July 1994.
The following results were obtained:

| Thickeners | % Hydrogen Peroxide Retention after 20 hours of Boiling |
|---|---|
| Example 19 | 98 |
| Example 20 | 93 |
| ACULYN 44 | 91 |

EXAMPLE 31

This example measures the effect of shear rate on the viscosity of aqueous solutions containing 2.5% of the

thickeners of Examples 19 and 20 as compared to ACULYN 44. The viscosities were measured on a Cari-Med Rheometer $CSL^2$ 100.

| | Viscosity (cps) at Various Shear Rates ($sec^{-1}$) | | | | | |
|---|---|---|---|---|---|---|
| Thickener | 5 | 10 | 88 | 193 | 319 | 592 |
| Example 19 | 7735 | 7577 | 6101 | 4796 | 3754 | |
| Example 20 | 5066 | 4957 | 4073 | 2922 | 2275 | 1569 |
| ACULYN 44 | 1693 | 1648 | 1637 | 1690 | 1690 | 1570 |

As the above results indicate, the viscosities of the solutions containing the thickeners of Examples 19-20 decrease as the shear rates increase. An important requirement of associative thickeners for the personal care industry is that they need to exhibit shear thinning characteristics. Many thickeners exhibit Newtonian viscosity response to shear in personal care applications; however, lowering of viscosity with increasing shear is required in order to spread formulations evenly and smoothly. Shear ranges common in the personal care application area usually vary from about 10/sec to 1000/sec.

<u>EXAMPLE 32</u>

The performance of the thickeners of the present invention was evaluated for their response to pH. The associative thickeners were all diluted to 0.8% solids with water. The pH was varied using aqueous ammonium hydroxide. The color/clarity was rated and the viscosity measured. Thickeners should have minimal change in viscosity, no change in color and provide clear formulations as pH is changed. The thickeners of the present invention showed excellent clarity and no color development over a pH range from 3 to 9. The following results were observed using a Brookfield heliopath viscometer - spindle D, factor 2m and compared to ACULYN 44.

| Thickener | Formulation pH | Color/Clarity | Brookfield Viscosity (cps) |
|---|---|---|---|
| Example 19 | 3.0 | Colorless/clear | 4,000 |
| Example 19 | 6.7 | Colorless/slightly hazy | 7,000 |
| Example 19 | 9.0 | Colorless/clear | 5,000 |
| Example 20 | 3.0 | Colorless/clear | 2,000 |
| Example 20 | 6.7 | Colorless/slightly hazy | 1,000 |
| Example 20 | 9.0 | Colorless/clear | 5,000 |
| ACULYN 44 | 3.0 | White/turbid | 460 |
| ACULYN 44 | 6.7 | White/turbid | 1,000 |
| ACULYN 44 | 9.0 | White/turbid | 640 |

EXAMPLE 33 - Paint Evaluation

The thickeners from Example 19 and Example 20 were individually formulated into two separate semigloss paint formulations, one using NACRYL 2550 and the other using RESYN 7448. The thickeners of Example 19 and Example 20 were also individually formulated into a flat paint using RESYN 7448. (Both NACRYL 2550 and RESYN 7448 are emulsion polymers used in commercial paint manufacturing and are available from Nacan Products Limited, Brampton, Ontario, Canada.)

In both the semigloss and flat paint formulations, both thickeners gave good thickener response, acceptable gloss and sheen, increased opacity or hiding power, good flow and leveling, good sag resistance, good scrub resistance

and thicker brush and roller applied layers. Overall, the two thickeners provided the balance of properties required in paint formulations.

EXAMPLE 34

Associative thickeners of the present invention were evaluated in a carpet backing adhesive and compared with an alkali soluble thickener typically used in the manufacture of carpet. Current carpet manufacturing techniques involve the placement of fiber bundles (tufts) through a backing substrate which are then secured by coating the back of the substrate with a latex based, carbonate containing compound. The thickened compound is typically "frothed" by incorporating air into the mixing process. The rheology of the formulated compound is optimized to provide the proper penetration of the coating into the substrate and yarn bundles, securing the fiber bundles to the carpet backing substrate. The result of this evaluation demonstrates the ability of the thickeners of the present invention to provide a stable viscosity to the compound at a lower use level than the alkali soluble thickeners currently utilized in the industry.

The following formulation, listed below, for a 600 load, 82% solids aqueous carpet adhesive compound was used. The latex used was styrene/butadiene LATEX 69778 available from Reichhold Chemical Company; the filler was calcium carbonate from Georgia Marble 200D; and the froth aid was PARACHEM-Southern, SCT-801. The amount of associative thickener was an amount required to reach a target viscosity of 16000 to 17000 cps as measured on a Brookfield RVT, spindle #5 at 20 rpm.

The results of Example 19A were compared with EXP-2612, a commercially available rheology modifier available from Alco Chemical.

| Formulation: | |
|---|---|
| Component | Wet Parts |
| Latex | 188.68 |
| Water | 56.5 |
| Filler | 600.0 |
| Froth Aid | 5.0 |
| Associative Thickener | As needed |

| Results: | | |
|---|---|---|
| Associative Thickener | EXP-2612 (control) | Example 19A |
| Dry grams of thickener | 0.90 | 0.48 |
| Initial Viscosity (cPs) | 16000 | 17000 |
| Froth time (min:sec) | 3:36 | 3:06 |
| Cup weight (grams) | 70.67 | 74.13 |
| Froth Viscosity (cPs) | 28300 | 25000 |
| Froth Appearance | Very good | Very good |

EXAMPLE 35

The associative thickeners of the present invention were evaluated in a generic formulation representative of a typical mastic adhesive used in floor covering installation.

The following formulation for a generic mastic adhesive compound was used in the evaluation. The latex used was NS 104 available from BASF Corporation, the tackifier was SNOTACK® resin from Ekza Nobel. The level of associative thickener used was the amount required to reach a target viscosity of 25500 to 26500 cps when measured on a Brookfield RVT, spindle #6 at 20 rpm.

| Component | Wet Parts |
|---|---|
| Latex | 160 |
| Tackifier | 40 |
| Associative thickener | As needed |

These formulations were applied with a notched trowel to provide a "ridged" coating to the substrate to be covered.

The following results were obtained. Associative thickeners Example 19A and Example 19 are representative of the present invention. The control is ACRYSOL® TT-615, a commercially available thickener from Rohm & Haas.

| Associative Thickener | Control | Ex. 19A | Ex. 19 |
|---|---|---|---|
| Wet grams of thickener | 2.3 | 3.94 | 4.11 |
| Initial viscosity (cps) | 25800 | 25600 | 27100 |
| Rheology | Short flow | Very long flow | Long flow |

Optimized rheology is desired to maintain the ridges until the floor covering is applied, at which time the compound is required to spread out under the covering for satisfactory adhesion to the substrate. The results of the evaluation demonstrate the ability of the associative thickeners of the present invention to provide the desired viscosity to the application compound. The rheology provided by the selected associative thickeners of the present invention is described as long flowing. The molecular weight of the various structural segments of the present invention, along with optimization of the degree of branching provided to the present invention may be utilized to manipulate the final rheology provided to the application compound.

EXAMPLE 36

The following formulation was used to evaluate the associative thickeners of the present invention in paper coating applications.

| Component | Dry Parts |
|---|---|
| Delaminated clay | 90 |
| Calcinated clay | 10 |
| Latex | 6 |
| Lubricant (calcium stearate) | 0.8 |
| Dispersant | 0.1 |
| Neutralizing agent (ammonium hydroxide) | 8.5 |
| Associative thickener | 3 levels as indicated in results table below |

The delaminated clay used was HYDRAPRINT® delaminated kaolin clay from J. M. Huber Co. The calcinated clay was HYCAL® calcinated kaolin also from J. M. Huber Co. The latex was GENFLO® 5092, Gencorp, Inc.; and the

dispersant was ALCOSPERSE® 149-P from Alco Chemical.

The following results were obtained from the evaluation. Associative thickeners Example 19A and Example 19 are representative of the present invention. For comparison a hydrophobically modified alkali soluble emulsion, HASE, available under the designation ALCOGUM® SL-78 from Alco Chemical was used. Viscosity was measured on a Brookfield viscosity, 20 rpm, spindle #4.

| Associative Thickener | Addition level (dry %) | Viscosity |
|---|---|---|
| Blank (no thickener) | --- | 130 |
| HASE control | 0.1 | 1020 |
| | 0.2 | 2640 |
| | 0.3 | 6500 |
| Example 19A | 0.1 | 770 |
| | 0.2 | 1450 |
| | 0.3 | 1860 |
| Example 19 | 0.1 | 2020 |
| | 0.2 | 3260 |
| | 0.3 | 4640 |

As the above results indicate, the nonionic associative thickeners of the present invention are particularly useful in paper coating applications. Paper coating formulations are typically thickened by synthetic polymers that require an alkaline environment for activation. Alternative thickeners include thickeners derived from natural sources such as starch and cellulose, which typically require some form of conversion to provide water solubility, and have a limited pH range for application. The products of the present invention may be employed to provide efficient thickening over a broad pH range with no need to convert, solubilize or otherwise process the thickeners to enable them to function. The result of the evaluation demonstrates the ability of the products of the present invention to provide efficient thickening along with the ability to manipulate the rheology imparted to the paper coating for optimized coating application.

EXAMPLE 37

This example demonstrates the effective thickening of typical latex polymers by the thickeners of the present invention. Four latex polymers all available from National Starch and Chemical Company were used in this example and are representative of latex polymers which are used in various industrial applications for latex polymers, for example, in adhesive, binder, coating, textile, paper and sizing applications:

1. DUROSET E-150: a 55% solids ethylene vinyl acetate latex copolymer containing polyvinyl alcohol and having a Tg of +11 °C and a viscosity of 3600 cps.
2. RESYN 1025: a 55% solids vinyl acetate latex containing polyvinyl alcohol and having a Tg of +30°C and a viscosity of 800 cps.
3. DUROSET E-623: a 52% solids ethylene vinyl acetate latex copolymer containing surfactant and having a Tg of 0°C and a viscosity of 350 cps.
4. NACRYLIC X4280: a 51% solids acrylic copolymer containing surfactant and having a Tg of -4°C and a viscosity of 200 cps.

A formulation was prepared from 100 g of latex and 0.5 g of thickener. Comparative Example 6 was compared to Examples 19 and 20. Example 6 was less effective than Examples 19 and 20 for thickening latex polymers. Viscosity was measured using Brookfield viscometer using #7 spindle at 20 rpm. Results are in Example 37 table.

Example 37 Table

| Thickening of Latex Polymerizations Viscosity Studies | | | | | | | |
|---|---|---|---|---|---|---|---|
| Example 6 | | | Example 19 | | | Example 20 | |
| 20 Speed / Spindle #7 | | | | | | | |
| **Dispersion Sample** | **Viscosity (cps)** | | **Dispersion Sample** | **Viscosity (cps)** | | **Dispersion Sample** | **Viscosity (cps)** |
| Duroset E-150 | 7200 | | Duroset E-150 | 7800 | | Duroset E-150 | 11.400 |
| Resyn 1025 | 3400 | | Resyn 1025 | 8800 | | Resyn 1025 | 6,600 |
| Duroset E-623 | 1000 | | Duroset E-623 | 450 (Spindle #6) | | Duroset E-623 | 800 |
| Nacrylic X-4280 | 800 | | Nacrylic X-4280 | 1400 | | Nacrylic X-4280 | 600 |

## Claims

**1.** A polymer having at least two low molecular weight hydrophobic groups, at least one of which is terminal, wherein the hydrophobic groups are separated from the polymer chain by a hydrophilic spacer moiety and wherein the spacer is connected to the polymer chain by a urethane or urea linkage.

**2.** A polymer of the general formula:

$$(XY_1Z)_n\text{-}A\text{-}(ZY_2X')_m$$

where X and X' are hydrophobic radicals, Z is an internal hydrophobic group, A is a polyol or an alkoxy based amine; $Y_1$ and $Y_2$ represent hydrophilic spacers; m and n are integers from 0 to 5 provided that $m + n > 1$ ; and Z is always attached to A via a urethane linkage if A is a polyol and attached to A via a urea linkage if A is an amine terminated alkoxy; and Z is attached to $Y_1$ and $Y_2$ via a urea linkage.

**3.** The polymer of Claim 2 herein $Y_1$ and $Y_2$ are selected from the group consisting of an amine terminated linear polyethoxylate chain, an amine terminated linear polyethoxylate/propoxylate chain or an amine terminated ethoxylated/butoxylated chain, and wherein the amine is primary or secondary.

**4.** The polymer of Claim 2 wherein $Y_1$ and/or $Y_2$ have a molecular weight of 1500 or less.

**5.** The polymer of Claim 3 wherein $Y_1$ and $Y_2$ are selected from the group consisting of polysuccinimide, polyvinyl pyrrolidone or poly n-vinyl formamide, and other amine terminated water soluble polymers.

**6.** A polymer according to Claim 2 wherein Z is derived from an isocyanate of the formula OCN-R-NCO wherein R is aliphatic, cycloaliphatic or aromatic with 1 to 10 carbon atoms.

**7.** A polymer according to Claim 2 wherein Z is derived from an isocyanate selected from the group consisting of 1,4-tetramethylene diisocyanate, 1,6-hexamethylene diisocyanate ("HDI"), 2,2,4-trimethyl-1,6-diisocyanatohexane, 1,10-decamethylene diisocyanate, 1,4-cyclohexylene diisocyanate, 4,4'-methylenebis(isocyanatocyclohexane), 1-isocyanato-3-isocyanatomethyl-3,5,5-trimethylcyclohexane, m- and p-phenylene diisocyanate, 2,6- and 2,4-tolylene diisocyanate, xylene diisocyanate, 4-chloro-1,3-phenylene dilsocyanate, 4,4'-biphenylene diisocyanate, 4,4'-methylene diphenylisocyanate, 1,5-naphthalene diisocyanate, 1,5-tetrahydronaphthalene dilsocyanate, isophorone diisocyanate, hexamethylene diisocyanate and 4,4'-methylene bis (cyclohexyl) diisocyanate.

**8.** A polymer according to Claim 2 wherein Z is derived from an isocyanate selected from the group consisting of 4,4'-methylene bis (cyclohexyl) diisocyanate, 4,4'-methylene diphenylisocyanate, isophorone diisocyanate, and hexamethylene diisocyanate.

**9.** A polymer according to Claim 2 wherein A is polyethylene glycol with molecular weight less than about 20,000.

**10.** A polymer according to Claim 2 wherein A is selected from the group consisting of polyethylene glycol, trimethylol propane, and combinations thereof.

**11.** A polymer according to Claim 2 wherein A is selected from the group consisting of bisphenol A ethoxylates; diols of EO/BO, EO/PO, EO/BO/PO polymers; triols of EO/BO, EO/PO, EO/BO/PO polymers; diols of hydroxy terminated polyurethane polyols based upon polyethylene glycol or alkoxy based amines; triols of hydroxy terminated polyurethane polyols based upon polyethylene glycol or an alkoxy based amines; 2-ethyl-2-(hydroxymethyl)-1,3-propanediol; pentaerythritol; glycerol; sorbitol; polyethylene glycol and combinations thereof.

**12.** A polymer selected from the group consisting of $(XY_1Z)_n$-A-$(ZX')_m$, $(XZ)_n$-A-$(ZY_2X')_m$, and $(XY_1Z)_n$-A-$(ZY_2X')_m$ and combinations thereof.

**13.** A process to prepare a polymer comprising reacting an isocyanate terminated polyetherpolyurethane with an alkoxylated amine hydrophobic group.

**14.** The process according to Claim 13 wherein the amine is a primary amine.

**15.** The process according to Claim 13 wherein the amine is a secondary amine.

**16.** A process to thicken water comprising adding the polymer of Claim 1.

**17.** A process to thicken an aqueous solution comprising adding the polymer of Claim 1.

**18.** A process to thicken an aqueous emulsion comprising adding the polymer of Claim 1.

**19.** A process to thicken an aqueous suspension comprising adding the polymer of Claim 1.

**20.** A cosmetic composition comprising the polymer of Claim 1.

**21.** A skin care composition comprising the polymer of Claim 1.

**22.** A hair care formulation comprising the polymer of Claim 1

**23.** A paper coating composition comprising the polymer of Claim 1.

**24.** An adhesive composition comprising the polymer of Claim 1.

**25.** A binder composition comprising the polymer of Claim 1.

European Patent Office

# EUROPEAN SEARCH REPORT

Application Number
EP 99 11 4927

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 314 816 A (TEXACO DEVELOPMENT CORP) 10 May 1989 (1989-05-10) * page 2, line 42 - line 54 * * examples 3,4 * --- | 13,14 | C08G18/10 C08G18/12 C08G18/50 C09D7/00 |
| A | US 5 612 408 A (KOENIG KLAUS ET AL) 18 March 1997 (1997-03-18) * page 1, line 28 - page 3, line 18 * * column 7 - column 8; examples 1,1A * --- | 1,16-19, 25 | |
| A | US 5 281 654 A (EISENHART ERIC K ET AL) 25 January 1994 (1994-01-25) * examples 1,13,18 * --- | 1,20-22, 25 | |
| A | US 5 496 908 A (BOSTROM PETER ET AL) 5 March 1996 (1996-03-05) * column 2, line 16 - column 4, line 64 * * example 1; table 1 * --- | 1-3,6-8, 16-19,25 | |
| D,A | US 4 079 028 A (EMMONS WILLIAM D ET AL) 14 March 1978 (1978-03-14) * column 2, line 44 - column 4, line 44 * * examples 154,155,273; table 16 * ----- | 1,16-19, 23,25 | TECHNICAL FIELDS SEARCHED (Int.Cl.7) C08G C09D |

The present search report has been drawn up for all claims

| Place of search | Date of completion of the search | Examiner |
|---|---|---|
| THE HAGUE | 11 November 1999 | Neugebauer, U |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 11 4927

This annex lists the patent family members relating to the patent documents cited in the above-mentioned European search report.
The members are as contained in the European Patent Office EDP file on
The European Patent Office is in no way liable for these particulars which are merely given for the purpose of information.

11-11-1999

| Patent document cited in search report | Publication date | Patent family member(s) | Publication date |
|---|---|---|---|
| EP 0314816 A | 10-05-1989 | NONE | |
| US 5612408 A | 18-03-1997 | DE 19503281 A | 08-08-1996 |
| | | CA 2168405 A | 03-08-1996 |
| | | DE 59603114 D | 28-10-1999 |
| | | EP 0725097 A | 07-08-1996 |
| | | JP 8253548 A | 01-10-1996 |
| US 5281654 A | 25-01-1994 | AT 150062 T | 15-03-1997 |
| | | AU 677244 B | 17-04-1997 |
| | | AU 5261293 A | 21-07-1994 |
| | | BR 9305235 A | 02-08-1994 |
| | | CA 2110855 A | 15-07-1994 |
| | | CN 1091760 A | 07-09-1994 |
| | | DE 69308803 D | 17-04-1997 |
| | | DE 69308803 T | 21-08-1997 |
| | | DK 606749 T | 14-04-1997 |
| | | EP 0606749 A | 20-07-1994 |
| | | ES 2098684 T | 01-05-1997 |
| | | FI 935749 A | 15-07-1994 |
| | | GR 3022804 T | 30-06-1997 |
| | | HK 122697 A | 12-09-1997 |
| | | IL 108141 A | 30-10-1998 |
| | | JP 6240133 A | 30-08-1994 |
| | | NO 934697 A | 15-07-1994 |
| | | NO 975117 A | 15-07-1994 |
| | | NZ 250523 A | 27-02-1996 |
| | | PL 301785 A | 25-07-1994 |
| | | ZA 9309607 A | 14-07-1994 |
| US 5496908 A | 05-03-1996 | SE 501624 C | 03-04-1995 |
| | | AT 164173 T | 15-04-1998 |
| | | AU 672622 B | 10-10-1996 |
| | | AU 4836493 A | 12-04-1994 |
| | | CN 1084522 A,B | 30-03-1994 |
| | | DE 69317568 D | 23-04-1998 |
| | | DE 69317568 T | 09-07-1998 |
| | | EP 0660851 A | 05-07-1995 |
| | | ES 2114069 T | 16-05-1998 |
| | | FI 951027 A | 06-03-1995 |
| | | JP 2665569 B | 22-10-1997 |
| | | JP 8501329 T | 13-02-1996 |
| | | NO 950980 A | 14-03-1995 |
| | | SE 9202648 A | 16-03-1994 |
| | | WO 9406840 A | 31-03-1994 |

EPO FORM P0459

For more details about this annex : see Official Journal of the European Patent Office, No. 12/82

**ANNEX TO THE EUROPEAN SEARCH REPORT ON EUROPEAN PATENT APPLICATION NO.** EP 99 11 4927

This annex lists the patent family members relating to the patent documents cited in the above-mentioned European search report.
The members are as contained in the European Patent Office EDP file on
The European Patent Office is in no way liable for these particulars which are merely given for the purpose of information.

11-11-1999

| Patent document cited in search report | Publication date | Patent family member(s) | Publication date |
|---|---|---|---|
| US 4079028 A | 14-03-1978 | BE 862857 A | 12-07-1978 |
| | | US 4155892 A | 22-05-1979 |

EPO FORM P0459

For more details about this annex : see Official Journal of the European Patent Office, No. 12/82